# EUROPÄISCHE PATENTSCHRIFT

(11) **EP 0 646 780 B1**
(45) Veröffentlichungstag und Bekanntmachung des Hinweises auf die Patenterteilung: **12.05.1999**
(21) Anmeldenummer: 94115509.5
(22) Anmeldetag: 30.09.1994
(51) Int. Cl.: G01L 25/00

(54) **Massestapel für Kraft-Kontrollmessmaschinen mit direkter Massewirkung**
Stack of weights for force verifying measuring machines with direct mass application
Pile de masses pour les machines de mesure de vérification de force avec application directe de masse

(30) Priorität: 01.10.1993 DE 4333487
(43) Veröffentlichungstag der Anmeldung: 05.04.1995
(73) Patentinhaber: GTM GASSMANN THEISS MESSTECHNIK GMBH, D-64334 Seeheim-Jugenheim (DE)
(72) Erfinder: Gassmann, Helmut Dr.-Ing., D-64342 Seeheim-Jugenheim (DE); Kuhn, Wolfgang Dipl.-Ing., D-64342 Seeheim-Jugenheim (DE); Baethke, Klaus Dipl.-Ing, D-64342 Seeheim-Jugenheim (DE)
(74) Vertreter: Katscher, Helmut, Dipl.-Ing.

(56) Entgegenhaltungen:
- DE-A- 1 573 754
- DE-C- 3 909 914
- US-A- 3 194 050

## Beschreibung

Die Erfindung betrifft einen Massestapel für Kraft-Kontrollmeßmaschinen mit direkter Massewirkung gemäß dem Oberbegriff des Anspruchs 1.

Kraft-Kontrollmeßmaschinen dienen dazu, auf Kraftmeßdosen, Wägezellen und ähnliche Einheiten mit hoher Genauigkeit vorgegebene Kräfte aufzubringen, um eine Kalibrierung bzw. Eichung durchzuführen. Die Belastung erfolgt unmittelbar durch in einem Massestapel angeordnete Massescheiben, die nacheinander an einen auf die Probe wirkenden Belastungsrahmen angehängt werden, um eine Belastung in vorgegebenen Kraftstufen zu erreichen.

Zu diesem Zweck ist der aus den übereinandergestapelten Massescheiben bestehende Massestapel in der Kraft-Kontrollmeßmaschine auf einem absenkbaren Stapeltisch angeordnet. Die einzelnen Massescheiben sind über Verbindungselemente in der Weise formschlüssig, jedoch mit senkrechtem Spiel miteinander verbunden, daß sich beim Absenken des Stapeltisches die einzelnen Massescheiben nacheinander an den Belastungsrahmen anhängen.

Um Kraftnebenschlüsse und damit Verfälschungen der Meßergebnisse zu vermeiden, muß sichergestellt sein, daß zwischen dem jeweils am Belastungsrahmen hängenden Teilstapel und dem noch auf dem Stapeltisch ruhenden Teilstapel keine Berührung stattfindet. Diese Bedingung muß bei jedem Belastungsschritt erfüllt sein, bei dem eine weitere Massescheibe vom ruhenden Teilstapel abgehoben und an den am Belastungsrahmen hängenden Teilstapel angehängt wurde.

Eine weitere Anforderung besteht darin, daß die am Belastungsrahmen hängenden Massescheiben mit ausreichender Genauigkeit zentriert sind, d.h. daß jede Massescheibe in einer zur senkrechten Maschinenachse ausgerichteten Lage angehoben wird. Anderenfalls besteht die Gefahr, daß der Gesamtschwerpunkt des am Belastungsrahmen hängenden Teilstapels außermittig angeordnet ist, was zu einer exzentrischen Belastung der Probe und auch damit wieder zu einer Verfälschung des Meßergebnisses führen würde.

Bei einer aus der Praxis bekannten Kraft-Kontrollmeßmaschine mit direkter Massewirkung sind die zu einem Massestapel zusammengefaßten Massescheiben jeweils über einen einzigen, zentralen Kopfbolzen miteinander verbunden. Der Kopfbolzen ragt von der Massescheibe zentrisch nach unten in eine zentrale Bohrung der nächsten Massescheibe. Beim Absenken der unteren Massescheibe kommt eine innere Planfläche des Kopfes an einer Stirnfläche dieser Massescheibe beim Absenken zur Anlage. Eine gegenseitige Zentrierung soll dadurch erreicht werden, daß oberhalb des Kopfes des Kopfbolzens eine sich nach oben verjüngende Kegelstumpffläche vorgesehen ist und daß die zugeordnete Bohrung eine innere Kegelstumpffläche aufweist.

Da der zentrisch angeordnete Kopfbolzen von außen praktisch nicht zu sehen ist, ist keine Kontrollmöglichkeit gegeben, ob zwischen der obersten Massescheibe des unteren Teilstapels und dem Kopfbolzen der darüber angeordneten Massescheibe ein Kraftnebenschluß dadurch besteht, daß der Schaft des Kopfbolzens seitlich die Bohrungswand berührt.

Außerdem hat die zentral angeordnete Kegelstumpffläche nur eine geringe Ausrichtwirkung, weil die Masse der einzelnen Massescheiben mit einem verhältnismäßig großen Hebelarm angreift, während die im Bereich der Kegelstumpffläche auftretenden Ausrichtkräfte nur mit einem sehr kleinen Hebelarm wirken. Insbesondere ist festzustellen, daß die Richtwirkung nur so lange besteht, wie die beiden Kegelstumpfflächen miteinander in Berührung stehen. Dies führt dazu, daß am Ende des Ausrichtvorgangs immer noch eine Berührung zwischen den beiden Kegelstumpfflächen besteht; mit anderen Worten, es ist nicht auszuschließen und - wegen der zentralen Anordnung - auch nicht zu kontrollieren, daß die Kegelstumpfflächen an der Kraftübertragung im Belastunszustand teilnehmen, wodurch sich eine außermittige und nicht kontrollierbare Kraftübertragung ergibt.

Schließlich wird es als besonders nachteilig empfunden, daß eine Massescheibe aus dem Massestapel nur ausgewechselt werden kann, indem der Massestapel bis zu dieser auszuwechselnden Massescheibe hin demontiert wird. Dies bedingt einen erheblichen Arbeitsaufwand und deshalb eine störende, längere Betriebsunterbrechung.

Bei einem anderen aus der Praxis bekannten Massestapel für Kraft-Kontrollmeßmaschinen sind als Verbindungselemente zwischen den einzelnen Massescheiben an deren Umfang jeweils drei C-förmige Klauen angebracht, die den Rand der jeweils darunter befindlichen Massescheibe mit axialem Spiel umgreifen. Am Umfang der Massescheiben und an der Innenseite der Klauen sind Kegelstumpfflächen vorgesehen, die der gegenseitigen Ausrichtung der Massescheiben beim Anheben und Absenken dienen.

Der Fertigungsaufwand für diese als Klauen ausgeführten Verbindungselemente ist verhältnismäßig hoch, weil die Klauen als schmale Segmente eines Ringes von verhältnismäßig großem Durchmesser gefertigt werden müssen. Dabei müssen Flächen, insbesondere die Kegelstumpfflächen, die einen verhältnismäßig großen Durchmesser haben, mit hoher Genauigkeit gefertigt werden.

Obwohl die Klauen am Scheibenumfang angeordnet sind, ist es nur verhältnismäßig schwer möglich zu kontrollieren, ob ein Kraftnebenschluß stattfindet, weil die Flächen, die dabei kontrolliert werden müssen, sich in Umfangsrichtung erstrecken.

Da die drei Klauen bei der Montage nicht mit ausreichend hoher Genauigkeit ausgerichtet werden können, ist die Verbindung zwischen benachbarten Massescheiben statisch unbestimmt, was zu einem Verklemmen führen kann.

Schließlich führt die Verbindung der Massescheiben durch am Umfang angeordnete Klauen dazu, daß sich die Massescheiben gegeneinander verdrehen können. Dadurch wird die Gefahr eines Kraftnebenschlusses durch seitliche Berührung erhöht.

Bei einem bekannten Massestapel für Kraft-Kontrollmeßmaschinen der eingangs genannten Gattung (DE 15 73 754 A) sind die Aufnahmeöffnungen, in die die als Verbindungselemente dienenden Kopfbolzen ragen, als zur Außenseite der Massenscheiben hin geschlossene Bohrungen ausgeführt. Die Zentrierung der Kopfbolzen erfolgt über deren Kegelstumpfflächen an einem Absatz der jeweils zugeordneten Aufnahmebohrung. Da die der Zentrierung dienenden Kegelstumpfflächen jeweils unmittelbar bis zu der inneren Planfläche des Kopfes verlaufen, die sich an einer Stirnfläche der Massescheibe abstützt, ist ein Verkanten der jeweils angehobenen Massescheibe nicht sicher auszuschließen, wenn die Abstützung beim Anheben an einem der drei Kopfbolzen noch an dessen Kegelstumpffläche erfolgt. Diese Anordnung, bei der die drei Kopfbolzen mit konischen Zentrierflächen in Bohrungen hineinragen, ist statisch unbestimmt und deshalb nur bei ausreichendem Spiel und genauer Ausrichtung funktionsfähig. Insbesondere besteht aber keine Möglichkeit einer Sichtkontrolle von außen.

Aufgabe der Erfindung ist es daher, einen Massestapel für Kraft-Kontrollmeßmaschinen der eingangs genannten Gattung so auszubilden, daß eine wirksame gegenseitige Zentrierung beim Anheben und Absenken sichergestellt ist und zugleich eine einfache und wirksame Kontrolle ermöglicht wird, ob ein Kraftnebenschluß durch seitliche Berührung im Bereich der Verbindungselemente besteht.

Diese Aufgabe wird erfindungsgemäß dadurch gelöst, daß bei einem Massestapel der eingangs genannten Galtung die Aufnahmeöffnungen für die Kopfbolzen jeweils zum Scheibenumfang offene radiale Aufnahmeschlitze sind und daß sich an die Kegelstumpffläche jeweils eine zylindrische Paßfläche anschließt, die mit einer Spielpassung in den Aufnahmeschlitz paßt.

Durch die Zentrierung der drei Kopfbolzen in den passenden radialen Aufnahmeschlitzen ergibt sich eine statisch bestimmte Verbindung zwischen benachbarten, aneinanderhängenden Massescheiben. Dadurch ist sichergestellt, daß alle Massescheiben, die am Belastungsrahmen hängen, zueinander und zur Maschinenachse ausgerichtet sind. Dadurch wird eine exzentrische Belastung ausgeschlossen. Die Passung zwischen der zylindrischen Paßfläche des Kopfbolzens und den Wänden des Aufnahmeschlitzes kann als eine sehr enge Spielpassung ausgeführt werden, weil sowohl der Durchmesser der zylindrischen Paßfläche als auch die Breite des Aufnahmeschlitzes mit hoher Genauigkeit gefertigt und in einfacher Weise gemessen werden können.

Da die Aufnahmeschlitze zum Scheibenumfang hin offen sind, kann beim Anhängen jeder einzelnen Massescheibe schnell und in einfacher Weise kontrolliert werden, ob ein Kraftnebenschluß zur jeweils darunter befindlichen, noch nicht angehängten Massescheibe besteht.

Jede Massescheibe aus dem Massestapel kann einzeln demontiert und ausgewechselt werden, ohne daß hierfür eine Montage weiterer Massescheiben erforderlich ist.

Die sich an den Mittelabschnitt des Kopfbolsens anschließende Kegelstumpffläche dient nur dazu, die zylindrische Paßfläche des Kopfbolzens in den Aufnahmeschlitz zu leiten. Da der Kegelstumpffläche des Kopfbolzens keine Kegelstumpffläche an der Massescheibe gegenübersteht, besteht auch keine Gefahr, daß im Belastungszustand eine Krafteinleitung über diese Kegelstumpffläche erfolgen könnte.

Vorzugsweise ist vorgesehen, daß sich an den Mittelabschnitt des Kopfbolzens nach beiden Richtungen jeweils über eine als Ausrichtfläche dienende Kegelstumpffläche eine zylindrische Paßfläche anschließt, die mit einer Spielpassung in den Aufnahmeschlitz paßt. Dann ist die erwähnte, statisch bestimmte gegenseitige Ausrichtung der beiden benachbarten Massescheiben sowohl innerhalb des am Belastungsrahmen hängenden Teilstapels als auch innerhalb des auf dem Stapeltisch ruhenden Teilstapels gegeben. Damit wird erreicht, daß beim Anhängen einer einzelnen Teilscheibe, d.h. beim Abheben dieser einzelnen Teilscheibe vom unteren Teilstapel. bereits eine Ausrichtung zu der darüber befindlichen Massescheibe sichergetellt ist. Daher treten beim Anhängen jeder einzelnen Scheibe keine außermittigen Kräfte auf, die zu einer Pendelbewegung des hängenden Teilstapels führen könnten. Dies wiederum führt dazu, daß die einzelnen Belastungsstufen verhältnismäßig rasch durchlaufen werden können.

Weitere vorteilhafte Ausgestaltungen sind Gegenstand der abhängigen Ansprüche.

Die Erfindung wird nachfolgend an einem Ausführungsbeispiel näher erläutert, das in der Zeichnung dargestellt ist. Es zeigt:
Fig. 1 eine Kraft-Kontrollmeßmaschine mit direkter Massewirkung in einer Vorderansicht,
Fig. 2 einen vergrößerten Teilschnitt längs der Linie II-II in Fig. 1,
Fig. 3 in räumlicher Darstellungsweise zwei übereinander angeordnete Massescheiben mit ihren Verbindungselmenten,
Fig. 4 a)-c) Teilschnitte längs der Linie IV-IV in Fig. 2 in unterschiedlichen gegenseitigen Stellungen der beiden benachbarten Massescheiben und
Fig. 5 a)-c) die jeweils zugehörigen Teil-Ansichten in Richtung des Pfeiles V in Fig. 2.

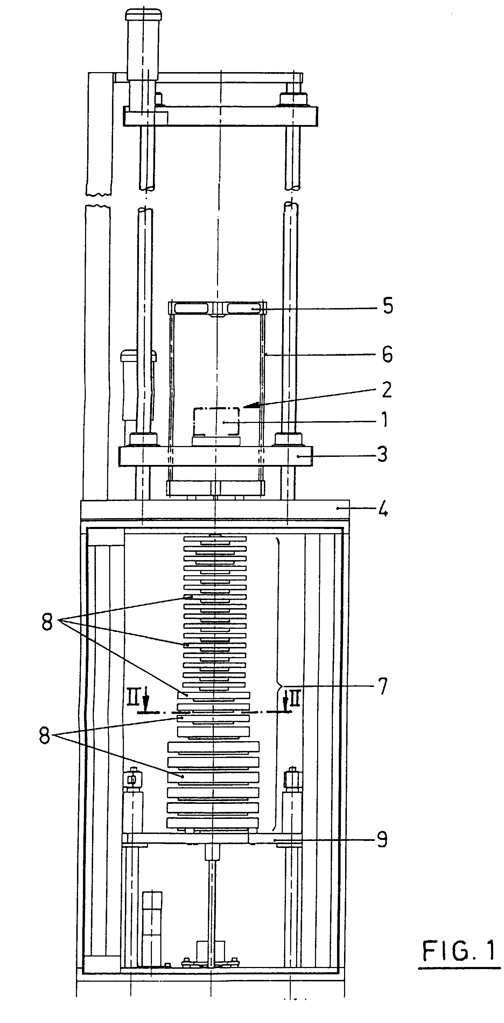

Die in Fig. 1 dargestellte Kraft-Kontrollmeßmaschine dient dazu, eine mit strichpunktierten Linien nur angedeutete Probe 1, beispielsweise eine Wägezelle, in vorgegebenen Kraftabstufungen zu belasten. Die Probe 1 ist zu diesem Zweck in einem Proberaum 2 zwischen einem Querträger 3 eines Maschinengestells 4 und einem beweglichen Querträger 5 eines Belastungsrahmens 6 angeordnet.

Am Belastungsrahmen 6 können in einem Massestapel 7 übereinandergestapelte Massescheiben 8 nacheinander angehängt werden, um vorgegebene Belastungsstufen mit hoher Genauigkeit zu erzeugen.

Der Massestapel 7 ruht auf einem Stapeltisch 9, der im Maschinengestell 4 absenkbar und anhebbar geführt ist. Die Massescheiben 8 sind in der nachfolgend näher beschriebenen Weise formschlüssig so miteinander verbunden, daß bei einem Absenken des Stapeltisches 9 nacheinander die einzelnen Massescheiben 8 an den Belastungsrahmen 6 angehängt werden.

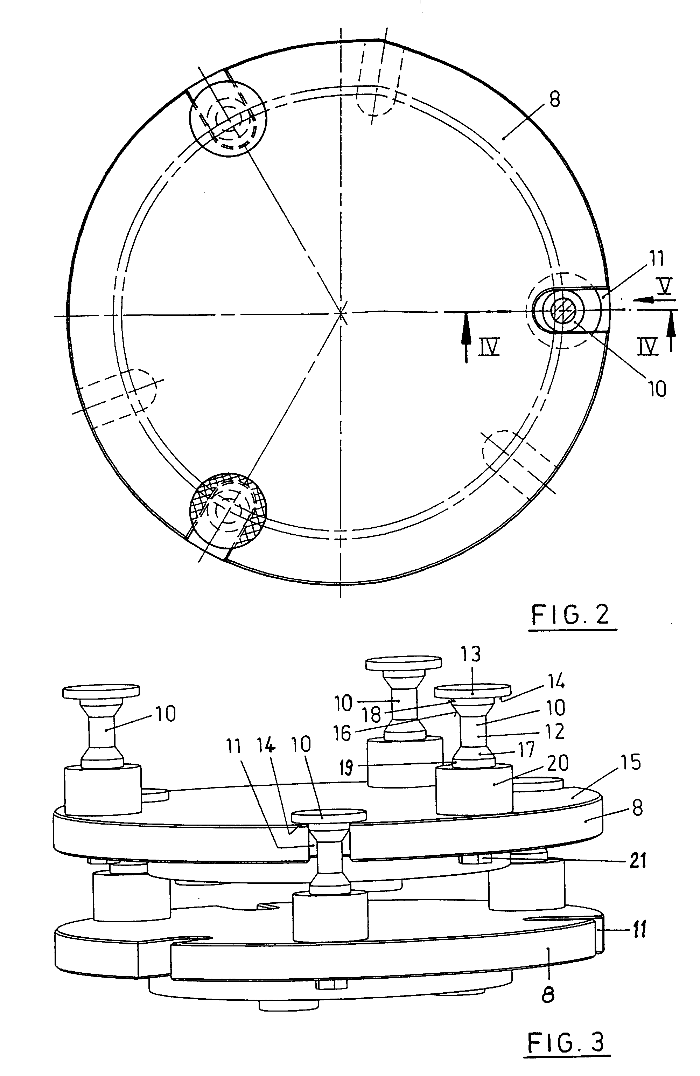

Wie man aus den Fig. 2-5 erkennt, sind die übereinander angeordneten Masscheiben 8 jeweils durch drei am Scheibenumfang angeordnete, als Kopfbolzen 10 ausgeführte Verbindungselemente miteinander in senkrechter Richtung verbindbar. Jeder Kopfbolzen 10 ragt durch einen zugeordneten, zum Scheibenumfang offenen, radialen Aufnahmeschlitz 11. Aus den Fig. 2 und 3 erkennt man, daß die Kopfbolzen 10 und die Aufnahmeschlitze 11 übereinander angeordneter Massescheiben 8 in Umfangsrichtung gegeneinander versetzt sind. Bei jeder Massescheibe 8 sind die Kopfbolzen 10 und auch die Aufnahmeschlitze 11 jeweils um 120° zueinander angeordnet.

Jeder Kopfbolzen 10 weist einen Mittelabschnitt 12 auf, der beispielsweise zylindrisch ist und dessen Breite (Durchmesser) geringer ist als die Breite des Aufnahmeschlitzes 11. Der Kopf 13 jedes Kopfbolzens 10 ist scheibenförmig und weist eine innere Planfläche 14 auf, die an die Stirnfläche 15 der jeweils nächsten Massescheibe 8 anlegbar ist.

Der Mittelabschnitt 12 geht nach oben und nach unten jeweils über eine Kegelstumpffläche 16 bzw. 17 in eine sich anschließende zylindrische Paßfläche 18 bzw. 19 über. Der Durchmesser dieser zylindrischen Paßflächen 18, 19 ist so bemessen und toleriert, daß er mit einer Spielpassung in den Aufnahmeschlitz 11 paßt.

Jeder Kopfbolzen 10 weist an seinem dem Kopf 13 abgekehrten - beim dargestellten Ausführungsbeispiel unteren - Befestigungsende einen zylindrischen Stützkörper 20 auf, dessen axiale Höhe größer ist als das Maß, um das der Kopfbolzen 10 bei abgesenkter Massescheibe 8 über diese Massescheibe hinausragt. Der Kopfbolzen 10 ist mittels einer zentralen Befestigungsschraube 21 mit der zugeordneten Massescheibe 8 verschraubt.

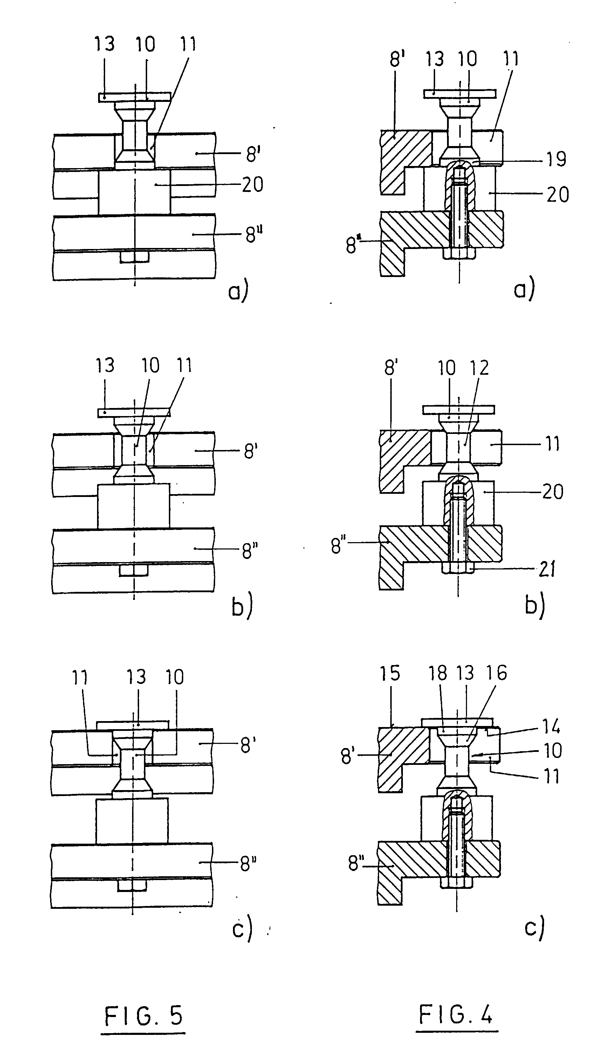

Die Fig. 4a) und 5a) zeigen ebenso wie die Fig. 3 die gegenseite Anordnung zweier benachbarter Massescheiben 8 in dem unteren, auf dem Stapeltisch 9 ruhenden Teilstapel. Die jeweils obere Massescheibe 8 ruht auf den Stützkörpern 20 der drei Kopfbolzen 10, die an der jeweils darunter befindlichen Massescheibe 8 angeschraubt sind und nach oben ragen. Deren Köpfe 13 ragen nur so weit über die obere Seite der oberen Massescheibe hinaus, daß sie die jeweils darüber befindliche (nicht dargestellte) Massescheibe auch im abgesenkten Zustand nicht berühren. Die vom Kopf 13 abgekehrte, dem Stützkörper 20 benachbarte zylindrische Paßfläche 19 ist hierbei zwischen den Wänden des Aufnahmeschlitzes 11 ausgerichtet, so daß die beiden Massescheiben 8 zueinander zentriert sind.

Wenn der Stapeltisch 9 abgesenkt wird, werden die einzelnen Massescheiben 8 nacheinander einzeln an den Teilstapel angehängt, der am Belastungsrahmen 6 hängt. Die Zuordnung der jeweils untersten Massescheibe 8' des oberen Teilstapels zu der jeweils obersten Massescheibe 8'' des unteren Teilstapels ist in den Fig. 4b) und 5b) dargestellt. Die untere Massescheibe 8'' ist so weit abgesenkt, daß die obere Massescheibe 8' nicht mehr auf den Stützkörpern 20 der dargestellten Kopfbolzen 10 ruht. Innerhalb des Aufnahmeschlitzes 11 befindet sich der Mittelabschnitt 12, dessen Durchmesser so gering ist, daß der Kopfbolzen 10 die Wände des Aufnahmeschlitzes 11 nicht berührt. Dadurch wird ein Kraftnebenschluß zwischen den Massescheiben 8' und 8'' vermieden; der am Belastungsrahmen 6 hängende Teilstapel, der die jeweilige Belastungsstufe definiert, steht nicht in Berührung mit den auf dem Stapeltisch 9 ruhenden Teilstapel, der nicht an der Belastung teilnimmt.Durch Einblick von außen und erforderlichenfalls Einführung von Kontrollehren beiderseits des Mittelabschnitts 12 kann kontrolliert werden, daß keinerlei Berührung und somit auch kein Kraftnebenschluß zwischen jedem der einzelnen Kopfbolzen 10 und dem zugeordneten Aufnahmeschlitz 11 besteht.

Wird zur Erreichung der nächsten Belastungsstufe der Stapeltisch 9 weiter abgesenkt, so nehmen die beiden vorher betrachteten Massescheiben 8' und 8'' die in den Fig. 4c) und 5c) dargestellte gegenseitige Stellung ein. Der Kopf 13 jedes der drei Kopfbolzen 10 kommt mit seiner inneren, unteren Planfläche 14 zur Anlage an der oberen Stirnfläche 15 der Massescheibe 8', wobei die kopfseitige zylindrische Paßfläche 18 zwischen den Seitenwänden des Aufnahmeschlitzes 11 ausgerichtet wird. Dadurch wird die Massescheibe 8'' gegenüber der Massescheibe 8' zentriert. In diesem Zustand ist die untere Massescheibe 8'' ebenfalls am oberen Teilstapel und damit am Belastungsrahmen 6 angehängt.

## Patentansprüche

1. Massestapel für Kraft-Kontrollmeßmaschinen mit direkter Massewirkung, bestehend aus mehreren, übereinander gestapelten Massescheiben (8, 8', 8''), die mit den unmittelbar benachbarten Massescheiben (8, 8', 8'') jeweils über drei am Scheibenumfang angeordnete Verbindungselemente (1) beim Absenken der jeweils unteren Massescheibe (8, 8', 8'') formschlüssig verbindbar sind, wobei die jeweils miteinander verbundenen Massescheiben (8, 8', 8'') am Belastungsrahmen (6) der Kraft-Kontrollmeßmaschine hängen, wobei jedes Verbindungselement (1) ein an der einen Massescheibe (8) befestigter Kopfbolzen (10) ist, dessen Kopf (13) mit axialem Abstand durch eine Aufnahmeöffnung der jeweils anderen Massescheibe (8) ragt und mit einer inneren Planfläche (14) seines Kopfes (13) an einer Stirnfläche (15) dieser anderen Massescheibe (8) beim Absenken anlegbar ist, wobei der Kopfbolzen (10) einen Mittelabschnitt (12) mit gegenüber der Breite der Aufnahmeöffnung verringerter Breite aufweist und sich an den Mittelabschnitt (12) mindestens kopfseitig eine als Ausrichtfläche dienende Kegelstumpffläche (16) anschließt, dadurch gekennzeichnet, daß die Aufnahmeöffnungen für die Kopfbolzen (10) jeweils zum Scheibenumfang offene radiale Aufnahmeschlitze (11) sind und daß sich an die Kegelstumpffläche (16) jeweils eine zylindrische Paßfläche (18) anschließt, die mit einer Spielpassung in den Aufnahmeschlitz (11) paßt.

2. Massestapel nach Anspruch 1, dadurch gekennzeichnet, daß sich an den Mittelabschnitt (12) des Kopfbolzens (10) nach beiden Richtungen jeweils über eine als Ausrichtfläche dienende Kegelstumpffläche (16, 17) eine zylindrische Paßfläche (18, 19) anschließt, die mit einer Spielpassung in den Aufnahmeschlitz (11) paßt.

3. Massestapel nach Anspruch 1, dadurch gekennzeichnet, daß der Kopfbolzen (10) an seinem dem Kopf (13) abgekehrten Befestigungsende einen Stützkörper (20) aufweist, dessen axiale Höhe größer ist als das Maß, um das der Kopfbolzen (10) bei abgesenkter Massescheibe (8) über die Massescheibe hinausragt.

4. Massestapel nach Anspruch 1, dadurch gekennzeichnet, daß der Kopfbolzen (10) mittels einer zentralen Befestigungsschraube (21) mit der Massescheibe (8) verschraubt ist.

## Claims

1. Stack of weights for force check gauges with direct weight effect, comprising several disc weights stacked one on top of the other (8,8', 8"), which can be positively linked to the directly adjacent disc weights (8, 8', 8") in each case by three link elements (1) located around the circumference of the disc when the appropriate lower disc weight (8, 8', 8") is lowered, where the linked disc weights (8, 8', 8") are attached to the load frame (6) of the force check gauge and each link element (1) is a set bolt (10) attached to one disc weight 8, the head (13) of said set bolt protruding with axial clearance through a location opening of the appropriate other disc weight (8), and which can rest against an internal face (14) of its head (13) on an outside face (15) of this other disc weight (8) when lowered, where the set bolt (10) comprises a centre section (12) of reduced width compared with the width of the location opening and where a tapered surface (16), acting as an aligning surface, is connected to at least the head end of the centre section (12), characterised in that the location openings for the set bolts (10) are radial location slits (11) which are open to the disc circumference and that a cylindrical mating surface (18) in each case, is connected to the tapered surface (16), which fits into the location slit (11) with clearance.

2. Stack of weights according to claim 1, characterised in that a cylindrical mating surface (18, 19) is connected to the centre section (12) of the set bolt (10) in both directions, in each case by a tapered surface (16, 17) acting as an aligning face, said mating surface fitting into the location slit (11) with clearance.

3. Stack of weights according to claim 1, characterised in that the set bolt (10) has at its attachment end facing away from the head (13) a support (20), the axial height of which is greater than the measure by which the set bolt (10) protrudes beyond the disc weight, when the disc weight (8) is lowered.

4. Stack of weights according to claim 1, characterised in that the set bolt (10) is bolted to the disc weight (8) by means of a central attachment bolt (21).

## Revendications

1. Pile de masses pour machines de mesure de vérification de force avec application directe de masse, constituée de disques de masse (8, 8', 8") empilés l'un sur l'autre, qui peuvent être reliés, avec adaptation de forme, aux disques de masse (8, 8', 8") directement voisins, respectivement au moyen de trois éléments de liaison (1) agencés sur la périphérie des disques, par abaissement du disque de masse (8, 8', 8") respectivement inférieur, pile dans laquelle les disques de masse (8, 8', 8") respectivement reliés l'un à l'autre sont suspendus au cadre de charge (6) de la machine de mesure de vérification de force, chaque élément de liaison (1) est un boulon à tête (10) fixé au premier disque de masse (8), dont la tête (13) passe, avec une certaine distance axiale, à travers une ouverture réceptrice de l'autre disque de masse respectif (8), et peut s'appliquer, par une surface plane interne (14) de sa tête (13), sur une surface frontale (15) de cet autre disque de masse (8) lors de l'abaissement, le boulon à tête (10) présentant une section centrale (12) de largeur réduite par rapport à la largeur de l'ouverture réceptrice et une surface tronconique (16) servant de surface d'alignement se raccordant à la section centrale (12) au moins du côté tête, caractérisée en ce que les ouvertures réceptrices pour les boulons à tête (10) sont respectivement ces fentes réceptrices radiales (il) ouvertes sur la périphérie des disques et en ce que, respectivement, une surface d'ajustement cylindrique (18), qui s'ajuste dans la fente réceptrice avec un certain jeu, se raccorde à la surface tronconique (16).

2. Pile de masses selon la revendication 1, caractérisée en ce qu'une surface d'ajustement cylindrique (18, 19), qui s'ajuste avec un certain jeu dans la fente réceptrice (11), se raccorde à la section centrale (12) du boulon à tête (10) dans les deux sens, respectivement, via une surface tronconique (16, 17) servant de surface d'alignement.

3. Pile de masses selon la revendication 1, caractérisée en ce que le boulon à tête (10) présente, sur son extrémité de fixation opposée à la tête (13), un corps d'appui (20) dont la hauteur axiale est plus grande que le degré de dépassement du boulon à tête (10) lors de l'abaissement du disque de masse (8) sur le disque de masse.

4. Pile de masses selon la revendication 1, caractérisée en ce que le boulon à tête (10) est vissé sur le disque de masse (8) au moyen d'une vis de fixation centrale (12).
